# EUROPÄISCHE PATENTANMELDUNG

(11) **EP 3 722 026 A1**
(43) Veröffentlichungstag der Anmeldung: **14.10.2020**
(21) Anmeldenummer: 20160906.2
(22) Anmeldetag: 04.03.2020
(51) Int. Cl.: B22F 3/105, B33Y 10/00, B33Y 30/00, B33Y 40/00

(54) **VORRICHTUNG UND VERFAHREN ZUR HERSTELLUNG VON DREIDIMENSIONALEN BAUTEILEN AUS METALLPULVER**

(30) Priorität: 11.04.2019 DE 102019205190
(71) Anmelder: Robert Bosch GmbH, 70442 Stuttgart (DE)
(72) Erfinder: Letsch, Andreas, 70565 Stuttgart (DE); Hlavac, Marcus, 71229 Leonberg-Hoefingen (DE); Willeck, Hannes, 71272 Renningen (DE); Ilin, Alexander, 71642 Ludwigsburg (DE); Echaniz, Aitor, 70197 Stuttgart (DE); Loeber, Lukas, 71638 Ludwigsburg (DE); Schoepf, Martin, 70499 Stuttgart (DE); Dittmaier, Ulrich, 97225 Zellingen (DE); Kiedrowski, Thomas, 74372 Sersheim (DE)

(57) **Zusammenfassung**

Die Erfindung betrifft eine Vorrichtung 1 zur Herstellung von dreidimensionalen Bauteilen 2 aus Metallpulver 21 mittels einer pulverbasierten additiven Fertigung aufweisend:
- Eine Reihe 3, in welcher mindestens eine Schmelzeinheit 4 zur Durchführung einer Schmelzbearbeitung zur Herstellung der dreidimensionalen Bauteile 2 aus dem Metallpulver 21 angeordnet ist,
- Eine Zufuhrlinie 5, welche auf einer Zufuhrseite 6 entlang der Reihe 3 von Schmelzeinheiten 4 verläuft und über welche standardisierte Behälter 14 einer beliebigen Schmelzeinheit 4 aus der Reihe 3 von Schmelzeinheiten 4 zur Herstellung der Bauteile 2 zuführbar sind, und
- Eine Abfuhrlinie 8, welche auf einer Abfuhrseite 9 entlang der Reihe 3 von Schmelzeinheiten 4 verläuft und über welche die standardisierten Behälter 14 mit den hergestellten Bauteilen 2 aus einer beliebigen Schmelzeinheit 4 aus der Reihe 3 von Schmelzeinheiten 4 abführbar sind.

Ferner betrifft die Erfindung ein Verfahren zur Herstellung von dreidimensionalen Bauteilen 2 aus Metallpulver mittels einer pulverbasierten additiven Fertigung.

## Beschreibung

### Stand der Technik

Die Erfindung betrifft eine Vorrichtung und ein Verfahren zur Herstellung von dreidimensionalen Bauteilen aus Metallpulver.

Verfahren der additiven Fertigung metallischer Bauteile aus metallischen Werkstoffen nehmen einen immer bedeutenderen Platz in der Industrie ein und sind beispielsweise aus der DE 10 2014 226 425 A1 bekannt.

Die Herstellung von metallischen Bauteilen mit solchen Verfahren erfolgt bevorzugt schichtweise. Ein solches schichtweises Verfahren ist beispielsweise in der DE 10 2014 226 425 A1 beschrieben. Bei einem solchen Verfahren wird ein schichtförmiges Pulverbett aus Pulverpartikeln auf einer Aufbaufläche angerichtet. Die Pulverpartikel dieses Pulverbettes werden dann bereichsweise bearbeitet, indem eine Schmelzbearbeitung durchgeführt wird, um einen festen und dauerhaften Verbund der Partikel zu erreichen. Anschließend wird die Aufbaufläche abgesenkt und es wird eine weitere Schicht des Pulverbettes aufgebracht und bearbeitet. So kann schichtweise ein komplexes dreidimensionales Bauteil hergestellt werden.

Im Rahmen der additiven Fertigung von metallischen Bauteilen sind das Elektronenstrahlschmelzen (EBM) und das selektive Laserschmelzen (SLM) wichtige Verfahren der Schmelzbearbeitung. Ein solches Laserschmelzen ist ebenfalls in der DE 10 2014 226 425 A1 beschrieben.

### Offenbarung der Erfindung

Hiervon ausgehend sollen eine Vorrichtung und ein Verfahren zur Herstellung von dreidimensionalen Bauteilen aus Metallpulver mittels einer pulverbasierten additiven Fertigung vorgestellt werden. Insgesamt sollen die Effizienz und die Produktivität der additiven Fertigung mit der Vorrichtung und dem Verfahren erhöht werden.

Hier beschrieben werden soll eine Vorrichtung zur Herstellung von dreidimensionalen Bauteilen aus Metallpulver mittels einer pulverbasierten additiven Fertigung aufweisend:
- Eine Reihe, in welcher mindestens eine Schmelzeinheit zur Durchführung einer Schmelzbearbeitung zur Herstellung der dreidimensionalen Bauteile aus dem Metallpulver angeordnet ist,
- Eine Zufuhrlinie, welche auf einer Zufuhrseite entlang der Reihe von Schmelzeinheiten verläuft und über welche standardisierte Behälter einer beliebigen Schmelzeinheit aus der Reihe von Schmelzeinheiten zur Herstellung der Bauteile zuführbar sind, und
- Eine Abfuhrlinie, welche auf einer Abfuhrseite entlang der Reihe von Schmelzeinheiten verläuft und über welche die standardisierten Behälter mit den hergestellten Bauteilen aus einer beliebigen Schmelzeinheit aus der Reihe von Schmelzeinheiten abführbar sind.

Die Vorrichtung ermöglicht die Automatisierung sämtlicher Peripherieprozesse rund um die Schmelzbearbeitung. Diese Peripherieprozesse sind weiter oben teilweise bereits beschrieben und sie werden bisher üblicherweise manuell durchgeführt und erhöhen damit die Neben- und Standzeiten von Anlagen zur Durchführung einer Schmelzbearbeitung (Montage der Bauplattform, das (Vor-) Heizen, Beschichten, Entpulvern/Reinigen, Entstützen, etc.). Diese Peripherieprozesse können an der beschriebenen Vorrichtung mit den in Reihe angeordneten Schmelzeinheiten, der Zufuhrlinie und der Abfuhrlinie entsprechend eingerichtet bzw. ausgerichtet werden. Sämtliche für die Durchführung von Peripherieprozessen notwendigen Komponenten können an den Schmelzeinheiten, an der Zufuhrlinie oder an der Abfuhrlinie angeordnet werden.

Es kann eine intelligente Verkettung und Vernetzung der Komponenten zur Durchführung der Peripherieprozesse für Prozesstechnik und Post-Processing ermöglicht werden. Es kann auch eine Entkopplung des Zeitbedarfs für Peripherieprozesse von der Durchführung des Hauptprozesses erreicht werden. Als "Hauptprozess" wird hier die Schmelzbearbeitung, also die eigentliche Herstellung von dreidimensionalen Bauteilen aus Metallpulver in der Schmelzeinheit, bezeichnet. Es kann vor allem eine hohe Parallelisierung erreicht werden, in der Peripherieprozesse ganz oder zumindest teilweise gleichzeitig zum Hauptprozess in der Vorrichtung durchgeführt werden. Dies führt zu einer signifikanten Reduktion von Nebenzeiten und dies steigert damit die Produktivität signifikant.

Die Vorrichtung umfasst bevorzugt auch ein Produktleitsystem oder sie ist an ein Produktleitsystem angeschlossen, mit welchem die in der Vorrichtung stattfindenden Prozessschritte gesteuert bzw. koordiniert werden können.

Die Vorrichtung ermöglicht es ein Automatisierungskonzept umsetzen, das die Automatisierung sämtlicher Peripherieprozesse ermöglicht, die heute im Rahmen der additiven Fertigung notwendig sind (Montage der Bauplattform bzw. Aufbaufläche, Pulverhandhabung, das (Vor-)Heizen, Beschichten, Entpulvern/Reinigen, Entstützen, etc.). Die Automatisierung kann in einem (zentralen) Produktleitsystem erfolgen. Diese Automatisierung kann durch den Einsatz integrierter Prozesseinheiten zur Durchführung der Peripherieprozesse in der Vorrichtung erreicht werden. Für diese Automatisierung können an der Vorrichtung gegebenenfalls zusätzlich Fördersysteme und/oder Roboter zur Förderung der standardisierten Behälter bzw. der Bauteile vorhanden sein. Die nicht produktiven Nebenzeiten lassen sich im Sinne von Industrie 4.0 mittels intelligenter Verkettung der Einheiten für Prozesstechnik und Post-Processing über das zentrale Produktleitsystem signifikant reduzieren und teilweise eliminieren. Wenn mit der beschriebenen Vorrichtung eine vollständige Automatisierung erfolgt ist, kommt der Maschinenbediener selbst nicht mehr mit Pulver in Kontakt und die Anforderungen an die persönliche Schutzausrüstung des Mitarbeiters werden entsprechend geringer.

Insbesondere in der Medizintechnik sind Anwendungen zur serienmäßigen Herstellung von Bauteilen mit der hier beschriebenen Vorrichtung der additiven Fertigung denkbar. In dem Bereich der Medizintechnik ist es häufig nötig, individuelle Anpassungen von Bauteilen vorzunehmen, beispielsweise bei der Herstellung von Prothesenbauteilen, die an den jeweiligen Patienten angepasst werden sollen. In solchen Anwendungsfällen ist die Verwendung der additiven Fertigung besonders vorteilhaft, weil hierdurch mit geringem Aufwand Anpassungen an einzelnen Bauteilen als Einzelstücken individuell vorgenommen werden können. Es ist denkbar, dass die hier beschriebene Vorrichtung in Zukunft auch in anderen Bereichen der Technik, beispielsweise dem Flugzeugbau oder dem Fahrzeugbau, zur Anwendung kommen kann. Für die breite Anwendung der hier beschriebenen Vorrichtung für die additive Fertigung in der Serienfertigung kann der Begriff "Additive Manufacturing" verwendet werden. Insbesondere kann die hier beschriebene Vorrichtung so umgesetzt werden, dass die Kosten für die additive Fertigung nicht mehr wesentlich höher sind als die Kosten für eine klassische Fertigung. Durch die hier beschriebene Vorrichtung bzw. durch das "Additive Manufacturing" im Allgemeinen können viele Dinge vereinfacht werden. Beispielsweise kann auf den Bau von Werkzeugen und Formen verzichtet werden, die für die klassischen Fertigungsverfahren erforderlich wären.

Insbesondere wenn in den Schmelzeinheiten der hier beschriebenen Vorrichtung das Elektronenstrahlschmelzen (EBM) und/oder das selektive Laserschmelzen (SLM) zur Schmelzbearbeitung eingesetzt werden, kann ein hoher Anteil manueller Prozessschritte und Peripherieprozesse, die oft als Nebenzeiten den Nutzungsgrad der Anlagen stark limitieren würden, in die Automatisierung mit integriert werden. Mit dem Begriff "Peripherieprozess" sind hier Nebenaufgaben gemeint, die neben der Schmelzbearbeitung ausgeführt werden müssen, um mit der additiven Fertigung bzw. mit der Schmelzbearbeitung ein fertiges Bauteil zu erhalten.

Durch die hier beschriebene Vorrichtung kann die manuelle Handhabung von Bauplattformen zum schichtweisen Aufbauen von dreidimensionalen Bauteilen entfallen. Solche Bauplattformen müssen durch die hier beschriebene Vorrichtung nicht händisch in die Maschinen für den schichtweisen Aufbau und die Schmelzbearbeitung eingebaut und nach Beendigung des Aufbaus wieder ausgebaut werden. Hierdurch entfallen erhebliche Rüstzeiten. Die Beladung mit Metallpulver und die Entnahme des überschüssigen Metallpulvers muss nicht durch einen Maschinenbediener manuell durchgeführt werden. Im Prozess befindliches Metallpulver, welches in der Schmelzeinheit als überflüssiges Metallpulver anfällt, kann wiederverwendet werden. Es kann automatisiert aufgesammelt, in einer separaten Station gesiebt und dem Prozess wieder zugeführt werden. Ein Vorheizen kann ebenfalls in den Prozess integriert werden. Ein Vorheizen ist regelmäßig notwendig, um die für die Schmelzbearbeitung notwendigen Temperaturen zu erreichen. Das Vorheizen der Bauplattform vor Beginn eines Aufbaus geschieht innerhalb der Maschine und wirkt somit als produktivitätsverringernde Nebenzeit (Peripherieprozess). Diese Nebenzeit kann mit dem beschriebenen Verfahren effektiv genutzt werden, indem diese Nebenzeit anfällt, während der standardisierte Behälter auf der Zufuhrlinie der Schmelzeinheit zugeführt wird. Für den additiven Aufbauprozess im Rahmen der Schmelzbearbeitung ist schichtweise Metallpulver mit einem Beschichtungssystem auf der Bauplattform bzw. auf der Aufbauplattform zu deponieren. Während des Beschichtungsvorgangs steht der Laser still und schmilzt kein Metall und führt zu einer reduzierten Auslastung des Lasers. Bevorzugt ist daher, dass der Beschichtungsvorgang in der Vorrichtung insbesondere im Arbeitsbereich des Lasers stattfindet, wobei vorzugsweise der Laser beispielsweise in einem zweiten Bereich schmilzt während in einem ersten Bereich Metallpulver aufgetragen wird. Zeitlich anschließend schmilzt der Laser im ersten Bereich während im zweiten Bereich Metallpulver aufgetragen wird. Die Vorrichtung ist eingerichtet dies sequenziell und wiederholt durchzuführen.

Besonders bevorzugt ist die Vorrichtung, wenn die mindestens eine Schmelzeinheit zur Aufnahme des standardisierten Behälters eingerichtet ist und wobei die Zufuhrlinie und die Abfuhrlinie dazu eingerichtet sind, die standardisierten Behälter zu fördern.

Der standardisierte Behälter ist eingerichtet, die Bauplattform bzw. Aufbauplattform zur Aufnahme des Metallpulver und/oder der additiv aufgebauten Bauteile aufzunehmen. Der standardisierte Behälter dient weiterhin als eine Art Werkstückträger für nach dem Schmelzen folgende Prozessschritte an den hergestellten Bauteilen, wie beispielsweise Abkühlen, Entpulvern, Reinigen und/oder einer Wärmebehandlung. Der standardisierte Behälter ist ein Behälter mit vorbestimmte Außenabmessungen, um im automatisierten Betrieb einfach befördert und in den Schmelzeinheiten sowie in weiteren Einheiten für das Post-Processing aufgenommen werden zu können. Die Innenabmessungen können variieren und ermöglichen somit die Aufnahme verschieden großer Bauplattformen für unterschiedliche Bauflächen. In dem Fall, dass der standardisierte Behälter bzw. das hergestellte Bauteil die Schmelzeinheit bereits verlassen und die Schmelzbearbeitung bereits durchlaufen hat, wird das hergestellte Bauteil auch als "schmelzbearbeitetes Bauteil" bezeichnet.

Besonders vorteilhaft ist die Vorrichtung, wenn der oder jeder standardisierte Behälter eine Kennzeichnung aufweist und wobei zumindest die mindestens eine Schmelzeinheit, die Zufuhrlinie und/oder die Abfuhrlinie dazu eingerichtet sind, die Kennzeichnung auszulesen. Eine solche Kennzeichnung kann beispielsweise RFID-basiert funktionieren. Es ermöglicht eine effiziente Überwachung des mit der Vorrichtung durchgeführten Verfahrens.

Besonders bevorzugt ist die Vorrichtung außerdem, wenn der oder jeder standardisierte Behälter eine Heizung aufweist. Die Heizung ist bevorzugt plattenförmig und kann auch als Substratplattenheizung bezeichnet werden. Die Heizung dient insbesondere zum Vorheizen von der Bauplattform des standardisierten Behälters in der Zuführlinie. Die Heizung kann bevorzugt auch in den Schmelzeinheiten zur Unterstützung des Schmelzprozesses verwendet werden. Vorzugsweise ist die Heizung in der Bauplattform angeordnet. Die Heizung befindet sich bevorzugt in einem unteren Teil der Bauplattform innerhalb des standardisierten Behälters. Die Heizung ist bevorzugt eine elektrische Heizung, die elektrischen Strom in Wärme umsetzt. Bevorzugt weisen die standardisierten Behälter einen Anschluss zur Übertragung von elektrischem Strom und/oder Einkopplungsmittel zur Einkopplung von elektrischer Energie auf. In einer Variante ist das Einkopplungsmittel zur induktiven, leitungslosen Übertragung von elektrischer Energie ausgebildet. Hiermit kann elektrischer Strom zum Betrieb der Heizung an bzw. in die standardisierten Behälter eingebracht werden. Besonders bevorzugt sind dieser Anschluss bzw. diese Einkopplungsmittel so ausgebildet, dass die Übertragung von Energie zu dem standardisierten Behälter bzw. zu der Heizung überall möglich ist, wo dies in der Vorrichtung nötig ist, insbesondere wenn Behälter sich auf der Zufuhrlinie und/oder in den Schmelzeinheit befinden. Besonders bevorzugt sind keine manuellen Maßnahmen zur Herstellung einer elektrischen Verbindung zu dem standardisierten Behälter und der Heizung notwendig. Die elektrische Verbindung wird bevorzugt unabhängig von der Position des standardisierten Behälters in der Vorrichtung sicher gestellt. Vorzugsweise ist die Vorrichtung eingerichtet, die Heizung in der Zuführlinie zu aktivieren, während sich der standardisierte Behälter in einer Warteposition vor den Schmelzeinheiten befindet.

Durch eine Codierung des standardisierten Behälters beispielsweise mittels RFID ist eine eindeutige Identifizierung möglich. Im Inneren des standardisierten Behälters befindet sich die Bauplattform, auf die in der Schmelzeinheit additiv aufgebaut wird. Über die Unterseite wird der Behälter mit der Bauplattform an das in der Schmelzeinheit befindliche Antriebssystem zur Startplattenabsenkung angekoppelt.

Die Vorrichtung ist zur Herstellung von dreidimensionalen Bauteilen aus Metallpulver mittels einer pulverbasierten additiven Fertigung mittels einer Schmelzbearbeitung eingerichtet. Daher weist die Vorrichtung bevorzugt Komponenten zum Aufbau des dreidimensionalen Bauteils aus Pulver auf. Hierzu zählt beispielsweise ein Beschichtungssystem zur schichtweisen additiven Fertigung des Bauteils aus Metallpulver. Ein solches Beschichtungssystem ist in den Schmelzeinheiten ausgebildet. Mit dem Begriff Bauteil ist hier sowohl das vollständige Bauteil als auch nur einzelne Bauteilabschnitte gemeint.

Die Vorrichtung umfasst zunächst eine Reihe von Schmelzeinheiten. Der kleinste Fall der Vorrichtung ist eine Variante mit nur einer Schmelzeinheit. Hier umfasst sind aber auch Varianten mit zwei, drei oder mehr in Serie zueinander angeordneten Schmelzeinheiten.

Die Vorrichtung umfasst eine Zufuhrlinie. Die Zufuhrlinie verläuft parallel zu der Reihe. Von der Zufuhrlinie ausgehend kann jede Schmelzeinheit in der Reihe mit standardisierten Behältern für die Schmelzbearbeitung versorgt werden. Die Zufuhrlinie kann, insbesondere leere, standardisierte Behälter gegebenenfalls aus einem Lager heraus den Schmelzeinheiten zuführen.

Die Vorrichtung umfasst weiter eine Abfuhrlinie. Die Abfuhrlinie verläuft ebenfalls parallel zur der Reihe der Schmelzeinheiten. Von den Schmelzeinheiten ausgehend können standardisierte Behälter mit den hergestellten Bauteilen über die Abfuhrlinie abgeführt werden. Gegebenenfalls können die schmelzbearbeiteten Bauteile von der Abfuhrlinie aus auch direkt einem nachfolgenden Prozess zugeführt werden. Als Variante sind ein, mehrere oder alle nachfolgenden Prozesse direkt in die Abfuhrlinie integriert. Insbesondere ist in der Abfuhrlinie eine Einheit zum Absaugen von überschüssigem Metallpulver und/oder eine Einheit zum Trennen der additiv gebauten dreidimensionalen Bauteile von der Bauplattform und/oder eine Einheit zur Entfernung von Stützstrukturen an den dreidimensionalen Bauteilen und/oder eine Wärmebehandlungseinheit zur Wärmebehandlung der dreidimensionalen Bauteile angeordnet.

Bevorzugt ist die Reihe von Schmelzeinheiten modular aufgebaut. Je nach Anwendungsfall können der Reihe der Schmelzeinheiten gegebenenfalls auch Schmelzeinheiten hinzugefügt oder aus der Reihe wieder entfernt werden.

Die standardisierten Behälter umfassen die Bauplattform, auf welcher der Aufbau des Bauteils mit einem additiven Fertigungsverfahren erfolgt. Dieser Aufbau des Bauteils erfolgt insbesondere in den Schmelzeinheiten mit Hilfe von dort dafür vorgesehenen Mitteln zum schichtweisen Aufbau von dreidimensionalen Bauteilen aus Metallpulver mittels pulverbasierter additiver Fertigung.

Bevorzugt weist jede Schmelzeinheit zumindest ein Antriebssystem zum schichtweisen Anheben und/oder schichtweisen Absenken der Bauplattform innerhalb des standardisierten Behälters beinhaltend das hergestellte Bauteil auf. Hiermit kann die Position der Bauplattform in der Höhe angepasst werden.

Durch eine Vorrichtung mit Schmelzeinheiten, welche jeweils zur Aufnahme von mindestens zwei, vorzugsweise genau zwei, standardisierten Behältern dienen, können Nebenzeiten und Standzeiten noch einmal weiter reduziert werden. Zur Reduzierung von Nebenzeiten teilen sich zwei standardisierte Behälter in einer Schmelzeinheit die Systeme zur Beschichtung mit Pulver, zur Vorheizung einer neu aufgetragenen Pulverschicht, zur Schutzgaszuführung und Schutzgasabführung (SLM) bzw. zur Vakuumerzeugung (EBM) etc. sowie zum Schmelzen des Pulvers. Somit kann im ersten standardisierten Behälter Metallpulver geschmolzen werden (Hauptzeit), während in dem benachbarten zweiten standardisierten Behälter hauptzeitparallel Metallpulver aufgetragen und/oder die neue Pulverschicht vorgeheizt wird. Ist die Prozessierung der Metallpulverschicht im ersten Baubehälter beendet, wird das Metallpulver im zweiten standardisierten Behälter geschmolzen und parallel im ersten standardisierten Behälter eine neue Schicht Pulver aufgetragen und vorgeheizt. Vorzugsweise sind die mindestens zwei standardisierten Behältern nebeneinander, insbesondere waagerecht nebeneinander, in der Schmelzeinheit angeordnet. In einer Variante sind die mindestens zwei standardisierten Behälter alternativ oder zusätzlich übereinander, insbesondere senkrecht übereinander, in der Schmelzeinheit angeordnet.

Bei einer Variante enthält die Schmelzeinheit und/oder die Zufuhrlinie zusätzlich eine Schleuse zur Aufnahme des oder der zwei standardisierten Behälter, um sie mit Schutzgas zu fluten (SLM-basierter Prozess) bzw. zu evakuieren (EBM-basierter Prozess) und/oder die Bauplattform vorzuheizen. Somit werden weitere Nebenzeiten eliminiert, da die Vorbereitung der neuen standardisierten Behälter stattfindet, während parallel in einem anderen standardisierten Behälter noch der additive Aufbauprozess durchgeführt wird. Bevor die Schmelzeinheit einen standardisierten Behälter nach Abschluss des Bauprozesses an die Abfuhrlinie übergibt, wird zum Schutz des noch heißen Pulvers und des aufgebauten Bauteils der standardisierten Behälter mit einem Deckel verschlossen. In einer Schmelzeinheit kann ein Werkstoff verarbeitet werden. Entlang der Linie können unterschiedliche Schmelzeinheiten zeitlich parallel jedoch verschiedene Werkstoffe verarbeiten.

Die Abfuhrlinie dient dazu, die standardisierten Behälter oder die fertigen dreidimensionalen Bauteile nach dem additiven Bauprozess abzukühlen. Anschließend erfolgen entlang der Abfuhrlinie in entsprechenden automatisierten Post-Processing-Einheiten das Absaugen von überschüssigem Pulver, das Trennen der additiv gebauten Bauteile von der Bauplattform und/oder die Entfernung von Stützstrukturen an den Bauteilen (Entstützen). In weiteren Einheiten entlang der verketteten und vorzugsweisen modularen Abfuhrlinie kann zusätzlich oder alternativ eine Wärmebehandlung der Bauteile durchgeführt werden. Es kann an der Vorrichtung ein geschlossener Kreislauf für abgesaugtes Metallpulver von der Abfuhrlinie zurück zu den Schmelzeinheiten vorgesehen sein. Das abgesaugte Metallpulver wird in einem geschlossenen Kreislauf nach dem Sieben (zum Herausfiltern von Schweißnebenprodukten) und Anreichern mit Neupulver wieder der Schmelzeinheit zugeführt. In einer Variante finden in diesem Kreislauf weitere automatisierte Abläufe zur Konditionierung des Metallpulvers statt, beispielsweise Trocknung und/oder Vorheizung.

Bevorzugt weist die Vorrichtung bzw. jede Schmelzeinheit der Vorrichtung auch eine Belichtungseinheit zur Schmelzbearbeitung auf, mit welcher das Metallpulver zur Herstellung des Bauteils schichtweise selektiv aufgeschmolzen wird.

Entlang der Zufuhrlinie gelangen die standardisierten Behälter über ein Fördersystem von einem Lager zu den einzelnen Schmelzeinheiten in der Linie. Auf der Zufuhrlinie können während der Wartezeit, bis in den Schmelzeinheiten der neue standardisierte Behälter benötigt wird, vorbereitende Prozessschritte wie z. B. das Vorheizen der Bauplattform des standardisierten Behälters durchgeführt werden. Die standardisierten Behälter werden durch die Schmelzeinheiten bei einem Produktionsleitsystem angefordert.

Bevorzugt weisen die Zufuhrlinie oder die Abfuhrlinie ein Förderband auf, mit welchem standardisierte Behälter parallel zu der Reihe mit Schmelzeinheiten befördert werden können. Bevorzugt weisen sowohl die Zufuhrlinie als auch die Abfuhrlinie ein Förderband auf.

Bevorzugt ist außerdem jeder Schmelzeinheit ein Schiebemechanismus zugeordnet, mit welchem die standardisierten Behälter von der Zufuhrlinie in die jeweilige Schmelzeinheit und von der jeweiligen Schmelzeinheit zu der Abfuhrlinie befördert werden können.

Mindestens ein Förderband und mindestens ein Schiebemechanismus bilden ein Transportsystem mit dem standardisierten Behälter innerhalb der Vorrichtung bewegt werden können.

Weiterhin bevorzugt ist, wenn jede Schmelzeinheit eine Schutzgasbereitstellung zur Bereitstellung von Schutzgas während der Schmelzbearbeitung aufweist. Durch ein Schutzgas in der Schmelzeinheit kann sichergestellt werden, dass der Schmelzprozess mit hoher Qualität stattfinden kann.

Hier auch beschrieben werden soll ein Verfahren zur Herstellung von dreidimensionalen Bauteilen aus Metallpulver mittels einer pulverbasierten additiven Fertigung, insbesondere mit einer vorstehend beschriebenen Vorrichtung, aufweisend die folgenden Schritte:
a) Fördern eines standardisierten Behälters mit einer Zufuhrlinie zu einer Schmelzeinheit aus einer Reihe von Schmelzeinheiten;
b) Durchführen einer Schmelzbearbeitung zur Herstellung der dreidimensionalen Bauteile aus dem Metallpulver in der Schmelzeinheit; und
c) Fördern des hergestellten Bauteils mit einer Abfuhrlinie aus der Schmelzeinheit hinaus.

Die im Zusammenhang mit der Vorrichtung beschriebenen besonderen Ausgestaltungsmerkmale und Vorteile sind auf das Verfahren anwendbar und übertragbar.

In einer Variante der beschriebenen Vorrichtung und des Verfahrens zur Herstellung von dreidimensionalen Bauteilen aus Metallpulver mittels einer pulverbasierten additiven Fertigung werden in den standardisierten Behältern Bauteilrohlinge den Schmelzeinheiten zugeführt. Hierzu wird vorzugsweise, insbesondere außerhalb der Vorrichtung, ein Bauteilrohling aus einem Pulverwerkstoff hergestellt. Hierzu werden Metallpulverpartikel zusammen gefügt, insbesondere verklebt. Dieser Bauteilrohling wird der Schmelzeinheit der Vorrichtung einer Schmelzbearbeitung, insbesondere einer Erwärmung, unterzogen. Dabei verbinden sich die Metallpulverpartikel des Bauteilrohlings intensiver, so dass das Bauteil seine endgültige Festigkeit erreicht. In einer Variante werden zusätzlich oder alternativ Bauteilrohlinge aus anderen Herstellungsprozessen, beispielsweise gegossene Bauteilrohlinge und/oder gedrehte Bauteilrohringe und/oder gefräste Bauteilrohrlinge, den Schmelzeinheiten zugeführt. Vorzugsweise ist vorgesehen, dass in den Schmelzeinheiten auf die zugeführten Bauteilrohrlinge additive aufgebaut wird, so dass Hybridbauteile hergestellt werden. In einer weiteren Variante werden alternativ oder zusätzlich Bauteilrohrlinge zugeführt, die lediglich eine einzige, erste Pulverschicht umfassendes Bauteil umfassen, wobei die Bauteilrohringe vorzugsweise am Boden der Bauplattform eines standardisierten Behälters angelegt sind

### Kurze Beschreibung der Zeichnungen

Die Vorrichtung und das Verfahren sollen nachfolgend anhand der Figuren näher erläutert werden. Die Figuren zeigen bevorzugte Ausführungsbeispiele, auf welche die Offenbarung jedoch nicht begrenzt ist. Es zeigen:
- Fig. 1:: eine beschriebene Vorrichtung,
- Fig. 2: ein beschriebenes Verfahren,
- Fig. 3:: einen Ausschnitt der in Figur 1 beschriebenen Vorrichtung.

### Beschreibung von Ausführungsbeispielen

Nachfolgend wird ein Automatisierungskonzept für pulverbettbasierte, additive Fertigungssysteme inklusive der Peripherieprozesse beschrieben. Das beschriebene Automatisierungskonzept ermöglicht die Automatisierung sämtlicher üblicherweise händischer Prozesse, beispielsweise die Montage der Bauplattform, die Metallpulverhandhabung, das (Vor-)Heizen der Bauplattform, das Beschichten, das Entpulvern, das Reinigen und oder das Entstützen des hergestellten dreidimensionalen Bauteils, mittels integrierter Prozesseinheiten, Fördersystemen und/oder durch den Einsatz von Robotern.

Die nachfolgend beschriebene Vorrichtung zur Herstellung von dreidimensionalen Bauteilen umfasst insbesondere zumindest einen standardisierter Behälter (Baubehälter), zumindest eine Zufuhrlinie für die standardisierten Behälter, zumindest eine Schmelzeinheit, insbesondere eine Schmelzeinheit zum selektiven Laserschmelzen (SLM) und/oder eine Schmelzeinheit zum Elektronenstrahlschmelzen (EBM), sowie zumindest eine Abfuhrlinie für die standardisierten Behälter.

Der standardisierter Behälter ist ausgebildet, die Bauplattform, das Metallpulver und das additiv aufgebaute Bauteil aufzunehmen. Ferner ist der standardisierte Behälter als Werkstückträger für die nach dem Schmelzen folgenden Prozessschritte, beispielsweise Abkühlen, Entpulvern, Reinigen und/oder Wärmebehandlung, ausgebildet. Der standardisierte Behälter zeichnet sich durch vorgegebenen und damit vereinheitlichte, mithin standardisierte Außenabmessungen aus, so dass der standardisierte Behälter im automatisierten Betrieb einfach befördert und in den Schmelzeinheiten sowie in weiteren Einheiten für das Post-Processing aufgenommen werden kann. Es ist dabei vorgesehen, dass der standardisierte Behälter unterschiedliche Innenabmessungen aufweisen kann. Dies trägt dazu bei, dass verschieden große Bauplattformen für unterschiedliche Bauflächen aufgenommen werden können. Ferner ist eine Codierung des standardisierten Behälters, beispielsweise mittels RFID ("radio-frequency identification"), vorgesehen, so dass eine eindeutige Identifizierung der standardisierten Behälter möglich ist. Im Inneren des standardisierten Behälters befindet sich die als Startplattform ausgebildete Bauplattform, auf die in der Schmelzeinheit additiv aufgebaut wird. Über die Unterseite wird der Behälter mit der Bauplattform an das in der Schmelzeinheit befindliche Antriebssystem zur Bauplattformabsenkung angekoppelt.

Entlang der Zufuhrlinie gelangen die standardisierten Behälter über ein Fördersystem von einem Lager zu den einzelnen Schmelzeinheiten in der Linie. Hier werden während der Wartezeit, bis in der Schmelzeinheit der neue Behälter benötigt wird, vorbereitende Prozesseschritte wie beispielsweise das Vorheizen der Bauplattform durchgeführt. Die Behälter werden durch die Schmelzeinheiten bei einem Produktionsleitsystem angefordert.

Die Linie mit den Schmelzeinheiten ist als zentrales Element der Vorrichtung modular aufgebaut. Eine Linie kann aus einem oder mehreren Schmelzeinheiten zusammengesetzt sein. Eine Schmelzeinheit ist vorzugsweise ausgebildet, zwei auswechselbare, standardisierte Behälter aufzunehmen. Ferner umfasst die Schmelzeinheit ein Antriebssystem zur Bauplattformbewegung, insbesondere zum schichtweisen Absenken der Bauplattform.
Zur Reduzierung von Nebenzeiten teilen sich die zwei Behälter in einer Schmelzeinheit in einer bevorzugten Ausführungsform das Beschichtungssystem mit Metallpulver, eine Heizung zur Vorheizung einer neu aufgetragenen Metallpulverschicht, die Schmelzeinheit und/oder die Schutzgasbereitstellung bei SLM bzw. die Vakuumerzeugungseinheit bei EBM. Somit kann im ersten Behälter Metallpulver während einer Hauptzeit geschmolzen werden während in dem benachbarten zweiten Behälter hauptzeitparallel Metallpulver aufgetragen und vorzugsweise die neue Metallpulverschicht vorgeheizt wird. Ist die Bearbeitung der Metallpulverschicht im ersten Behälter beendet, wird das Metallpulver im zweiten Behälter geschmolzen und parallel im ersten Behälter eine neue Schicht Metallpulver aufgetragen und vorzugsweise vorgeheizt. In einer Variante umfasst die Schmelzeinheit zusätzlich eine Schleuse zur Aufnahme der einem, vorzugsweise von zumindest zwei Behälter, um die Behälter mit Schutzgas zu fluten (SLM-basierter Prozess) oder zu evakuieren (EBM-basierter Prozess). Vorzugsweise ist die Schleuse ausgebildet, die Bauplattform vorzuheizen. Dies hat den Vorteil, dass weitere Nebenzeiten eliminiert werden, da die Vorbereitung der neuen Behälter stattfindet während parallel in einem anderen Behälter noch der additive Aufbauprozess durchgeführt wird. Bevor die Schmelzeinheit einen standardisierten Behälter nach Abschluss des Bauprozesses an die Abfuhrlinie übergibt, wird zum Schutz des noch heißen Metallpulvers Pulvers und des Aufbaus der standardisierte Behälter beispielsweise mit einem Roboter mit einem Deckel verschlossen. In einer Schmelzeinheit wird vorzugsweise jeweils ein einziges Material eines Metallpulvers verarbeitet. Entlang der Linie der Schmelzeinheiten ist in einer Variante vorgesehen, dass die unterschiedlichen Schmelzeinheiten verschiedene Materialien der Metallpulver verarbeiten.

Die Abfuhrlinie ist eingerichtet, die Behälter nach dem additiven Bauprozess abzukühlen. Anschließend erfolgen entlang der Abfuhrlinie in entsprechenden automatisierten Post-Processing-Einheiten das Absaugen von überschüssigem Metallpulver und/oder das Trennen der additiv gebauten Bauteile von der Bauplattform und/oder die Entfernung von Stützstrukturen an den Bauteilen (Entstützen). In weiteren Einheiten entlang der verketteten Abfuhrlinie kann zusätzlich oder alternativ eine Wärmebehandlungseinheit zur Wärmebehandlung der Bauteile angeordnet sein.

Es ist vorgesehen, dass das abgesaugte Metallpulver in einem geschlossenen Kreislauf nach dem Sieben zur Herausfilterung von Schweißnebenprodukte und/oder einem Anreichern mit Neupulver wieder den Schmelzeinheiten zuzuführen. In einer Variante werden in diesem Metallpulverkreislauf weitere automatisierte Abläufe zur Konditionierung des Pulvers, wie beispielsweise eine Trocknung des Metallpulvers und/oder eine Vorheizung des Metallpulver, durchgeführt.

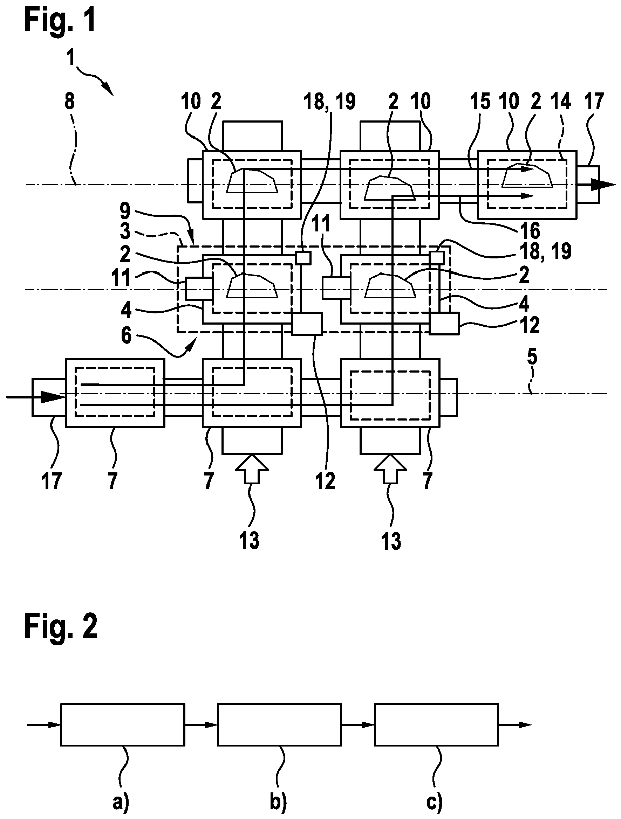

Fig. 1 zeigt eine Vorrichtung 1 umfassend eine Reihe 3 von Schmelzeinheiten 4, wobei die Reihe 3 hier zwei Schmelzeinheiten 4 umfasst. Parallel zu der Reihe 3 von Schmelzeinheiten 4 verlaufen eine Zufuhrlinie 5 und eine Abfuhrlinie 8. Die Zufuhrlinie 5 ist auf einer Zufuhrseite 6 der Reihe 3 von Schmelzeinheiten 4 angeordnet. Die Abfuhrlinie 8 ist auf einer Abfuhrseite 9 der Reihe 3 von Schmelzeinheiten 4 angeordnet. Die Schmelzeinheiten 4 dienen dazu, eine Schmelzbearbeitung zur Herstellung der Bauteile 2 aus einem Metallpulver durchzuführen. Die Zufuhrlinie 5 weist Zufuhrstationen 7 auf. Die Abfuhrlinie 8 weist Abfuhrstationen 10 auf. Die standardisierten Behälter 14 werden mittels Förderbänder 17 auf der Zufuhrlinie 5 bzw. auf der Abfuhrlinie 8 bewegt. Über die Zufuhrlinie 5 bzw. die Zufuhrstationen 7 können den Schmelzeinheiten 4 standardisierte Behälter 14 zugeführt werden. Über die Abfuhrlinie 8 bzw. die Abfuhrstationen 10 können die standardisierten Behälter 14 mit den hergestellten Bauteile 2 aus den Schmelzeinheiten 4 abgeführt werden. Der Transport und die Herstellung der Bauteile 2 erfolgt in standardisierten Behältern 14, in welchen sich die hergestellten Bauteile 2 auf einer Bauplattform befinden. Insbesondere die Schmelzeinheiten 4 sind dazu ausgebildet und eingerichtet, Nebenprozesse neben der Schmelzbearbeitung ebenfalls durchzuführen. Die Schmelzeinheiten 4 weisen insbesondere eine Belichtungseinheit 11, eine Schutzgasbereitstellung 12 und/oder ein Beschichtungssystem 19 zum schichtweisen Aufbau der Bauteile 2 auf.

Vorzugsweise haben die Schmelzeinheiten 4 auch ein Antriebssystem 18, mit welchem die Bauplattform der standardisierten Behälter 14 mit den halbfertigen Bauteilen 2 innerhalb der Schmelzeinheit 4 schichtweise nach oben und/oder vorzugsweise schichtweise nach unten befördert werden können. Dies ermöglicht einerseits ein Beschichtungssystem 19 zu verwenden, das eine in der Höhe feste Position hat. Mit dem Antriebsystem 18 kann die Bauplattform des standardisierte Behälters 14 relativ zu dem Beschichtungssystem 19 positioniert werden.

Entlang der Zufuhrlinie 5, der Abfuhrlinie 8 und der Schmelzeinheiten 4 existieren verschiedene Pfade für die standardisierten Behälter 14 durch die Vorrichtung 1. Hier beispielhaft sind ein erster Pfad 15 und ein zweiter Pfad 16 dargestellt.

Ferner ist jeder Schmelzeinheit 4 ein Schiebemechanismus 13 zugeordnet, mit welchem die standardisierten Behälter 14 von der Zufuhrlinie 5 in die jeweilige Schmelzeinheit 4 und von der jeweiligen Schmelzeinheit 4 zu der Abfuhrlinie 8 befördert werden können.

In Fig. 2 ist das mit der Vorrichtung ausgeführte Verfahren zur Herstellung von dreidimensionalen Bauteilen aus Metallpulver mittels einer pulverbasierten additiven Fertigung schematisch beschrieben. In Schritt a) erfolgt ein Fördern des standardisierten Behälters mit der Zufuhrlinie zu einer Schmelzeinheit aus einer Reihe von Schmelzeinheiten. In Schritt b) wird die Schmelzbearbeitung zur Herstellung der dreidimensionalen Bauteile aus dem Metallpulver in der Schmelzeinheit durchgeführt und in Schritt c) wird das hergestellte Bauteil mit einer Abfuhrlinie aus der Schmelzeinheit hinaus befördert.

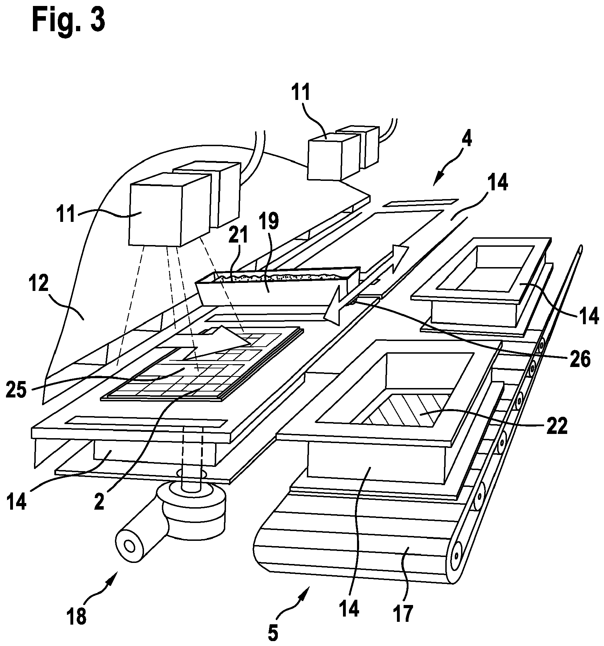

Figur 3 zeigt einen Ausschnitt der mit Bezug auf die Figur 1 beschriebenen Vorrichtung zur Herstellung von dreidimensionalen Bauteilen 2 aus Metallpulver 21 mit einer einzigen dargestellten Schmelzeinheit 4. Die Schmelzeinheit 4 ist ausgebildet gleichzeitig zwei standardisierte Behälter 14 aufzunehmen. Jedem der zwei standardisierten Behälter 14 ist jeweils ein Antriebssystem 18 zugeordnet. Dabei ist das Antriebssystem 18 ausgebildet, eine im Inneren des standardisierten Behälters 14 angeordnete Bauplattform 22 insbesondere nach oben und vorzugsweise während der Herstellung des dreidimensionalen Bauteils 2 nach unten zu befördern derart, dass ein schichtweiser Aufbau des dreidimensionalen Bauteils 2 erfolgt. Dabei ist das Antriebssystem 18 ausgebildet durch eine Öffnung des Bodens des standardisierten Behälters 14 hindurch die im standardisierten Behälter 14 angeordnete Bauplattform 22 zu beaufschlagen. Die Schmelzeinheit 4 umfasst ferner zwei Belichtungseinheiten 11, wobei jeweils eine Belichtungseinheit 11 einem der beiden standardisierten Behälter 14 zugeordnet ist. Die Belichtungseinheit 11 umfasst einen Laser und einen Umlenkspiegel, wobei die Belichtungseinheit 11 ausgebildet ist, mittels des Umlenkspiegels den Laserstrahl über die Bearbeitungsfläche 25 derart zu bewegen, dass der Laser das Metallpulver 21 selektiv und schichtweise verschmilzt, so dass durch den schichtweisen Aufbau das dreidimensionale Bauteil 2 erzeugt wird. Die Schmelzeinheit 4 umfasst ferner ein einziges Beschichtungssystem 19, das beiden standardisierten Behältern 14 zugeordnet ist. Das Beschichtungssystem 19 umfasst einen Behälter zur Aufnahme des Metallpulvers 21 und einen Rakel 26. Der Rakel 26 ist dabei als eine Gummilippe mit einer Öffnung für das Metallpulver 21 derart ausgebildet, dass beim seitlichen Überfahren der standarisierten Behälter 14 eine neue Schicht mit Metallpulver 21 aufgetragen wird. Die Schmelzeinheit 4 ist dabei derart ausgebildet, dass jeweils in einem der beiden Behälter 14 die Belichtungseinheit 11 eine weitere Schicht des dreidimensionalen Bauteils 2 schmilzt, während das Beschichtungssystem 19 zeitlich in dem jeweils anderen Behälter 14 eine weitere Schicht Metallpulver 21 auf das bestehende dreidimensionale Bauteil 2 aufträgt. In einer Variante umfasst die Schmelzeinheit 4 alternativ oder zusätzlich lediglich eine einzige Belichtungseinheit 11, die sowohl Metallpulver 21 des einen Baubehälters 14 als auch des zweiten Behälters 14 aufschmelzen kann. In einer weiteren Variante umfasst die Schmelzeinheit alternativ oder zusätzlich lediglich eine einziges Antriebssystem, das abwechselnd die Bauplattform 22 des ersten standardisierten Behälters 14 und die Bauplattform 22 des zweiten standardisierten Behälters 14 bewegt. Die Schmelzeinheit 4 umfasst ferner eine Schutzgasbereitstellung 12, wobei die Schutzgasbereitstellung 12 als lineare Schutzgasbereitstellung 12 ausgebildet ist, um ein Schutzgas über den Baubereich der standardisierten Behälter 14 zu leiten, so dass im Bereich des Schmelzens der Metallpulvers 21 eine Schutzgasatmosphäre vorliegt und zudem ein während des Schmelzens des Metallpulvers 21 erzeugter Rauch oder Dampf vom Schmelzbereich abgeführt wird. Parallel zu der Schmelzeinheit 4 ist eine Zufuhrlinie 5 umfassend ein Förderband 17 dargestellt. Über das Förderband 17 der Zufuhrlinie 5 werden die standardisierten Behälter 14 der Schmelzeinheit 4 oder den weiteren nicht dargestellten Schmelzeinheiten 4 zugeführt. In einem der standardisierten Behälter 14 der Zufuhrlinie ist beispielhaft eine Bauplattform 22 dargestellt.

## Patentansprüche

1. Vorrichtung (1) zur Herstellung von dreidimensionalen Bauteilen (2) aus Metallpulver (21) mittels einer pulverbasierten additiven Fertigung aufweisend:
- Eine Reihe (3), in welcher mindestens eine Schmelzeinheit (4) zur Durchführung einer Schmelzbearbeitung zur Herstellung der dreidimensionalen Bauteile (2) aus dem Metallpulver (21) angeordnet ist,
- Eine Zufuhrlinie (5), welche auf einer Zufuhrseite (6) entlang der Reihe (3) von Schmelzeinheiten (4) verläuft und über welche standardisierte Behälter (14) einer beliebigen Schmelzeinheit (4) aus der Reihe (3) von Schmelzeinheiten (4) zur Herstellung der Bauteile (2) zuführbar sind, und
- Eine Abfuhrlinie (8), welche auf einer Abfuhrseite (9) entlang der Reihe (3) von Schmelzeinheiten (4) verläuft und über welche die standardisierten Behälter (14) mit den hergestellten Bauteilen (2) aus einer beliebigen Schmelzeinheit (4) aus der Reihe (3) von Schmelzeinheiten (4) abführbar sind.

2. Vorrichtung (1) nach Anspruch 1, wobei die mindestens eine Schmelzeinheit (4) zur Aufnahme des standardisierten Behälters (14) eingerichtet ist und wobei die Zufuhrlinie (5) und die Abfuhrlinie (8) dazu eingerichtet sind die standardisierten Behälter (14) zu fördern.

3. Vorrichtung (1) nach einem der vorhergehenden Ansprüche, wobei der oder jeder standardisierte Behälter (14) eine Kennzeichnung aufweist und wobei zumindest die mindestens eine Schmelzeinheit (4), die Zufuhrlinie (5) und/oder die Abfuhrlinie (8) dazu eingerichtet sind, die Kennzeichnung auszulesen.

4. Vorrichtung (1) nach einem der vorhergehenden Ansprüche, wobei der oder jeder standardisierte Behälter (14) eine Heizung aufweist.

5. Vorrichtung (1) nach einem der vorhergehenden Ansprüche, wobei die mindestens eine Schmelzeinheit (4) ein Antriebssystem (18) aufweist, welches dazu eingerichtet ist, eine in dem standardisierten Behälter (14) angeordnete Bauplattform (22) anzuheben, insbesondere schichtweise anzuheben, und/oder abzusenken, insbesondere schichtweise abzusenken.

6. Vorrichtung (1) nach einem der vorhergehenden Ansprüche, wobei die mindestens eine Schmelzeinheit (4) ein Beschichtungssystem (19) aufweist, mit welchem Pulverschichten aufgebracht werden können.

7. Vorrichtung (1) nach einem der vorhergehenden Ansprüche, wobei die Reihe (3) mindestens zwei Schmelzeinheiten (4) umfasst.

8. Vorrichtung (1) nach einem der vorhergehenden Ansprüche, wobei die mindestens eine Schmelzeinheit (4) mindestens eine Belichtungseinheit (11) zur Schmelzbearbeitung aufweist, mit welcher das Metallpulver (21) zur Herstellung des Bauteils (2) schichtweise selektiv aufgeschmolzen wird.

9. Vorrichtung (1) nach einem der vorhergehenden Ansprüche, wobei die Zufuhrlinie (5) und/oder die Abfuhrlinie (8) ein Förderband (17) umfassen, mit welchen die standardisierten Behälter (14) parallel zu der Reihe (3) mit Schmelzeinheiten (4) befördert werden können.

10. Vorrichtung (1) nach einem der vorhergehenden Ansprüche, wobei der Schmelzeinheit (4) ein Schiebemechanismus (13) zugeordnet ist, mit welchem die standardisierten Behälter (14) von der Zufuhrlinie (5) in die Schmelzeinheit (4) und von der Schmelzeinheit (4) zu der Abfuhrlinie (8) befördert werden können.

11. Vorrichtung (1) nach einem der vorhergehenden Ansprüche, wobei die Schmelzeinheit (4) eine Schutzgasbereitstellung (12) zur Bereitstellung von Schutzgas während der Schmelzbearbeitung aufweist.

12. Vorrichtung (1) nach einem der vorhergehenden Ansprüche, wobei die Schmelzeinheit (4) dazu eingerichtet ist mindestens zwei, vorzugsweise zwei, standardisierte Behälter (14) aufzunehmen.

13. Vorrichtung (1) nach Anspruch 12, wobei die Schmelzeinheit (4) für die mindestens zwei standardisierten Behälter (14) eine einzige Belichtungseinheit (11) und/oder ein einziges Beschichtungssystem (19) und/oder ein einziges Antriebssystem (18) und/oder eine einzige Schutzgasbereitstellung (12) umfasst.

14. Vorrichtung (1) nach einem der vorhergehenden Ansprüche, wobei die Schmelzeinheit (4) und/oder die Zufuhrlinie (5) zumindest eine Schleuse zur Aufnahme zumindest eines standardisierten Behälters (14) von der Zufuhrseite (6) aufweist.

15. Vorrichtung (1) nach einem der vorhergehenden Ansprüche, wobei die Abfuhrlinie (5) zumindest eine Einheit zum Absaugen von überschüssigem Metallpulver (21) und/oder eine Einheit zum Trennen der additiv gebauten dreidimensionalen Bauteile (2) von der Bauplattform (22) und/oder eine Einheit zur Entfernung von Stützstrukturen an den dreidimensionalen Bauteilen (2) und/oder eine Wärmebehandlungseinheit zur Wärmebehandlung der dreidimensionalen Bauteile (2) aufweist.

16. Vorrichtung (1) nach einem der vorhergehenden Ansprüche, wobei der Schmelzeinheit (4) auf der Bauplattform (22) des standardisierten Behälters (14) angeordnete Bauteilrohlinge zugeführt werden, wobei die Schmelzeinheit (4) eingerichtet ist, auf den Bauteilrohlingen das dreidimensionale Bauteil (2) additiv aufzubauen.

17. Verfahren zur Herstellung von dreidimensionalen Bauteilen (2) aus Metallpulver (21) mittels einer pulverbasierten additiven Fertigung, vorzugsweise mittels einer Vorrichtung (1) gemäß einem der vorhergehenden Ansprüche, aufweisend die folgenden Schritte:
a) Fördern eines standardisierten Behälters (14) mit einer Zufuhrlinie (5) zu einer Schmelzeinheit (4) aus einer Reihe (3) von Schmelzeinheiten (4);
b) Durchführen einer Schmelzbearbeitung zur Herstellung der dreidimensionalen Bauteile (2) aus dem Metallpulver (21) in der Schmelzeinheit (4); und
c) Fördern des hergestellten Bauteils (2) mit einer Abfuhrlinie (8) aus der Schmelzeinheit (4) hinaus.
